# EUROPEAN PATENT APPLICATION

(11) **EP 4 067 320 A1**
(43) Date of publication of application: **05.10.2022**
(21) Application number: 22174125.9
(22) Date of filing: 13.06.2014
(51) Int. Cl.: C03C 21/00, C03C 27/00, B32B 17/00, C03C 3/062, C03C 3/12, C03C 3/064

(54) **LAMINATED GLASS ARTICLE WITH SCRATCH RESISTANT SURFACE**

(30) Priority: 14.06.2013 US 201361835214 P
(62) Divisional of application: 14736231.3
(71) Applicant: Corning Incorporated, Corning, New York 14831 (US)
(72) Inventor: DEJNEKA, Matthew, John, Corning, 14830 (US); MAURO, John, Christopher, Corning, 14830 (US)
(74) Representative: Elkington and Fife LLP

(57) **Abstract**

Disclosed herein are laminated glass articles having a hard scratch resistant outer surface. In some embodiments, the laminated glass article includes a glass core layer and a glass clad layer. In some embodiments, the laminated glass article includes a glass core layer sandwiched between two glass clad layers. In some embodiments, the clad glass is selected from the group of consisting of: aluminate glasses; oxynitride glasses; rare earth/transition metal glasses; beryl glasses; and glasses containing lithium, zirconium, or both lithium and zirconium. Such glass compositions can thus be used in forming the clad layer.

## Description

This application claims the benefit of priority under 35 U.S.C. § 119 of U.S. Provisional Application Serial No. 61/835214, filed on June 14, 2013, the content of which is relied upon and incorporated herein by reference in its entirety.

### BACKGROUND

### Field

The present specification generally relates to laminated glass articles and, more specifically, to laminated glass articles having a hard scratch resistant outer surface.

### Technical Background

Glass articles, such as cover glasses, glass backplanes and the like, are employed in both consumer and commercial electronic devices such as LCD and LED displays, computer monitors, automated teller machines (ATMs) and the like. Some of these glass articles may include "touch" functionality which necessitates that the glass article be contacted by various objects including a user's fingers and/or stylus devices and, as such, the glass must be sufficiently robust to endure regular contact without damage. Moreover, such glass articles may also be incorporated in portable electronic devices, such as mobile telephones, personal media players, and tablet computers. The glass articles incorporated in these devices may be susceptible to damage during transport and/or use of the associated device. Accordingly, glass articles used in electronic devices may require enhanced strength to be able to withstand not only routine "touch" contact from actual use, but also incidental contact and impacts which may occur when the device is being transported. Furthermore, such glass articles may greatly benefit from a scratch resistant surface and enhanced strength.

### SUMMARY

Disclosed herein are laminated glass articles having a hard scratch resistant outer surface. In some embodiments, the laminated glass article comprises a glass core layer and a glass clad layer. In some embodiments, the laminated glass article comprises a glass core layer sandwiched between two glass clad layers. In some embodiments, the clad glass is selected from the group of consisting of: aluminate glasses; oxynitride glasses; rare earth/transition metal glasses; beryl glasses; and glasses containing lithium, zirconium, or both lithium and zirconium. Such glass compositions can thus be used in forming the clad layer (one or more clad layers).

In a set of embodiments disclosed herein , clad glass can be paired with a core glass having a higher thermal expansion coefficient (CTE) than the CTE of the clad glass, and the clad layers having a lower thermal expansion coefficient provide a compressive stress, enhancing the overall strength. In some embodiments disclosed herein, an outer surface of one or both of the clad layers of a laminated glass article could also be further chemically strengthened, or made more scratch resistant, or both, via ion exchange.

In a set of embodiments disclosed herein, a laminated glass article, such as the outer surface of one or both of the clad layers of the laminated glass article, could be chemically strengthened via ion exchange, and in some embodiments without the clad glass being paired with a core glass having a higher (CTE) than the clad glass layer.

Additional features and advantages of the glass compositions and glass articles comprising the glass compositions will be set forth in the detailed description which follows, and in part will be readily apparent to those skilled in the art from that description or recognized by practicing the embodiments described herein, including the detailed description which follows, the claims, as well as the appended drawings.

It is to be understood that both the foregoing general description and the following detailed description describe various embodiments and are intended to provide an overview or framework for understanding the nature and character of the claimed subject matter. The accompanying drawings are included to provide a further understanding of the various embodiments, and are incorporated into and constitute a part of this specification. The drawings illustrate the various embodiments described herein, and together with the description serve to explain the principles and operations of the claimed subject matter.

### BRIEF DESCRIPTION OF THE DRAWINGS

FIG. 1 schematically depicts a cross section of a laminated glass article according to one or more embodiments shown and described herein; and
FIG. 2 schematically depicts a fusion draw process for making the glass article of FIG. 1.

### DETAILED DESCRIPTION

High hardness glasses that are compatible with a standard fusion draw process are difficult to obtain, however we have found that the liquidus viscosity requirement associated with standard single fusion can be relaxed in the laminate fusion draw process. In some embodiments, for example, the liquidus viscosity requirement for the clad layer can be approximately 50 kPoise, i.e. significantly lower than that required of standard single fusion. In order to provide enhanced scratch resistance to the laminated glass article, we provide a clad layer that is high in hardness, and therefore this lower liquidus viscosity requirement enables the production of harder glasses than could be obtained through single fusion. Also, the clad layer can represent a fraction, and even a small fraction, of the overall mass of the laminated glass article (or laminate, or glass laminate article), so costs associated with raw materials (that would, for example, otherwise need to be distributed throughout a standard single fusion sheet) could be mitigated. Furthermore, when the hard (or ultra-hard) clad glass is paired with a core glass having a higher thermal expansion coefficient, the clad layer develops a compressive stress, enhancing the overall strength. In some embodiments as disclosed herein, the glass laminate, for example the outer surface of one or both of the clad layers, could also be chemically strengthened via ion exchange.

In some embodiments, the clad glass may be selected from the group consisting of: glass compositions for use in the clad layer: aluminate glasses; oxynitride glasses; rare earth/transition metal glasses; beryl glasses; and glasses containing lithium, zirconium, or both lithium and zirconium. Such glasses having high hardness also generally have values of liquidus viscosity which are too low for what is required for single fusion; however we have found that condition to be relaxed in the clad layer of laminate fusion, thus enabling fusion formed glass articles that would not otherwise be possible. We have found significant improvement in glass hardness as compared to commercially available ion-exchanged strengthened glass, thereby providing improved scratch resistance, including resistance to microductile scratches. Compared to other ultra-hard cover materials such as sapphire, the laminated glass disclosed can be strengthened due to CTE mismatch and/or ion exchange. Thus, the laminated glass article combines high hardness with some level of compressive stress in the clad layer.

### Aluminate Glass

In these glasses Al₂O₃ is the primary network former, and only CaO and small amounts of SiO₂ are used to stabilize the glass. Other oxides such as MgO can also aid in glass stabilization. These glasses can achieve roughly 40% improvement in Young's modulus compared to commercially available ion-exchanged strengthened glass. Aluminate glass compositions typically do not require expensive or unusual raw materials and thus may be advantageous for various embodiments. Aluminate glasses can require the use of an alumina isopipe for forming the clad. Also, aluminate glasses have especially steep viscosity curves, which act to minimize compaction. Aluminate glasses are not ion exchangeable but may be suitable for embodiments that provide strengthened glass laminates by pairing with a higher CTE core glass.

### Oxynitride Glasses

In these glasses some of the two-coordinated oxygen anions are replaced with three-coordinated nitrogen. Each bridging oxygen atom contributes 2 rigid constraints to the glass network, whereas each nitrogen contributes 4.5 rigid constraints. Embodiments utilizing oxynitride glasses quite high Young's modulus, and can for example provide up to about 150% to 200% increase in Young's modulus compared to commercially available ion-exchanged strengthened glass, depending on the amount of nitrogen incorporated into the glass. Oxynitride glasses are generally black in color and therefore may not be suitable as a cover glass. However, they can be used, for example, as the backing substrate of a phone or other device. Oxynitride glasses are incompatible with platinum, so these glasses can be used with a non-platinum delivery system.

### Rare Earth/Transition Metal Glasses

Depending on the particular glass chemistry, these glasses can offer up to about 100% increase in Young's modulus compared to commercially available ion-exchanged strengthened glass; smaller increases generally entail higher liquidus viscosities. Oxides of particular interest for embodiments with increased hardness are Y₂O₃, Ta₂O₅, and/or La₂O₃. Oxynitride glasses can be ion-exchangeable, such as glasses containing Y₂O₃, for example those compositions disclosed in U.S. Patent Application Serial Number 61/653,495 filed on May 31, 2012 and entitled Ion Exchangeable Transition Metal-Containing Glasses; in some embodiments, the rare earth/transition metal glasses is alkali aluminosilicate glass, the alkali aluminosilicate glass comprising at least 50 mol% SiO₂, Al₂O₃, at least one metal oxide selected from the group consisting of transition metal oxides and rare earth metal oxides, and at least one alkali metal oxide R₂O, wherein the at least one alkali metal oxide includes Na₂O, wherein Al₂O₃(mol%) - Na₂O(mol%) ≤ 2 mol%, and wherein the alkali aluminosilicate glass is ion exchangeable.

### Beryl Glasses

Embodiments comprising beryllium aluminosilicate (beryl) offer great benefit for hardness, transparency, flexural rigidity, thermal stability, heat transparency, and low density.

### Glasses Containing Lithium and/or Zirconium

These glasses offer improvement in hardness and modulus; in some embodiments, an increase in Young's modulus of about 20%; examples of such glasses can be found in U.S. Patent Application Serial Number 13/904808 filed on May 29, 2013 and entitled Down-Drawable Chemically Strengthened Glass for Information Storage Devices.

Reference will now be made in detail to embodiments of glass compositions having low coefficients of thermal expansion and glass articles incorporating the same, examples of which are illustrated in the accompanying drawings. Whenever possible, the same reference numerals will be used throughout the drawings to refer to the same or like parts. The glass compositions and laminated glass articles comprising the glass composition will be further described herein with specific reference to the appended drawings.

The term "liquidus viscosity," as used herein, refers to the shear viscosity of the glass composition at its liquidus temperature.

The term "liquidus temperature," as used herein, refers to the highest temperature at which devitrification occurs in the glass composition.

The term "CTE," as used herein, refers to the coefficient of thermal expansion of the glass composition averaged over a temperature range from about 20°C to about 300°C.

In the embodiments of the glass compositions described herein, the concentration of constituent components (e.g., SiO₂, Al₂O₃, B₂O₃ and the like) are specified in mole percent (mol.%) on an oxide basis, unless otherwise specified.

As will be described in further detail herein, strengthened laminated glass articles may be formed by fusing glass cladding layers having a relatively low average coefficient of thermal expansion to a glass core layer which has a relatively high average coefficient of thermal expansion. As the laminated structure cools, the differences in the coefficients of thermal expansion of the glass core layer and the glass cladding layer create compressive stresses in the glass cladding layers.

The glass compositions described herein may optionally include one or more fining agents. The fining agents may include, for example, SnO₂, As₂O₃, Sb₂O₃ and combinations thereof. The fining agents may be present in the glass compositions in an amount greater than or equal to about 0 mol.% and less than or equal to about 0.7 mol.%. In exemplary embodiments, the fining agent is SnO₂. The SnO₂ may be present in the glass composition in a concentration greater than or equal to about 0 mol.% and less than or equal to about 0.7 mol.%. In these embodiments, SnO₂ may be present in the glass composition in a concentration which is greater than about 0 mol.% and less than or equal to about 0.7 mol.% or even less than or equal to about 0.15 mol.%.

When low CTE glass cladding layers are paired with a glass core layer having a higher CTE during a fusion lamination process, the difference in the CTEs of the glass core layer and the glass cladding layers results in the formation of a compressive stress in the glass cladding layers upon cooling. Accordingly, the glass compositions described herein may be utilized to form a strengthened laminated glass article.

Further, the glass compositions described herein have a liquidus viscosity suitable for fusion formation, such as by the fusion down-draw process and/or the fusion lamination process.

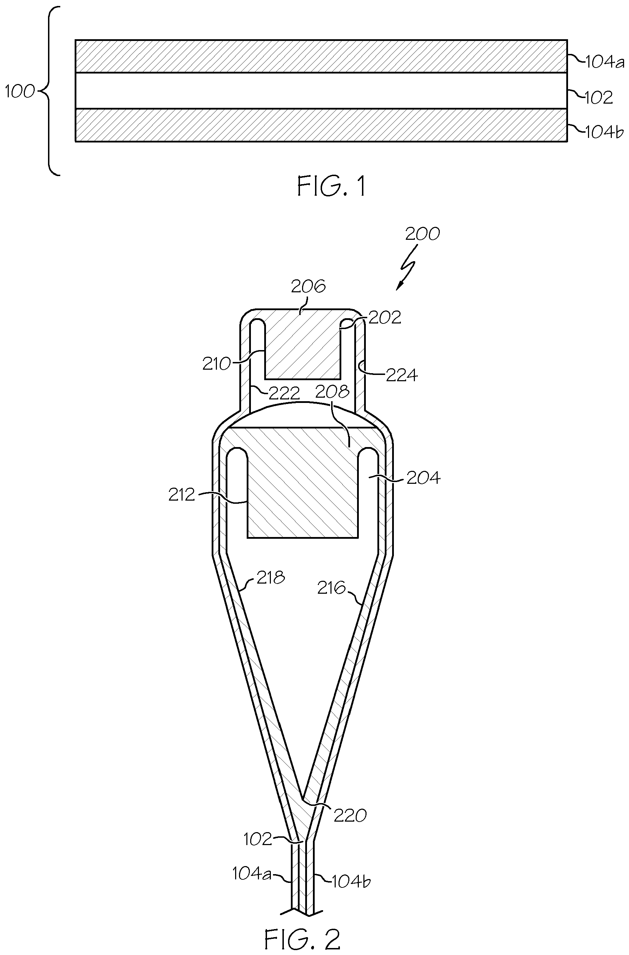

Referring now to FIG. 1, the glass compositions described herein may be used to form a glass article, such as the laminated glass article 100 schematically depicted in cross section in FIG. 1. The laminated glass article 100 generally comprises a glass core layer 102 and a pair of glass cladding layers 104a, 104b. The glass compositions described herein are particularly well suited for use as the glass claddings layers due to their relatively low coefficients of thermal expansion, as will be discussed in more detail herein.

FIG. 1 illustrates the glass core layer 102 shown comprising a first surface 103a and a second surface 103b which is opposed to the first surface 103a. A first glass cladding layer 104a is fused to the first surface 103a of the glass core layer 102 and a second glass cladding layer 104b is fused to the second surface 103b of the glass core layer 102. The glass cladding layers 104a, 104b are fused to the glass core layer 102 without any additional materials, such as adhesives, coating layers or the like, being disposed between the glass core layer 102 and the glass cladding layers 104a, 104b, thus a glass-glass or glass-glass-glass laminate. Thus, a first surface of the glass core layer is directly adjacent the first glass cladding layer, and a second surface of the glass core layer is directly adjacent the second glass cladding layer. In some embodiments, the glass core layer 102 and the glass cladding layers 104a, 104b are formed via a fusion lamination process. Diffusive layers (not shown) may form between the glass core layer 102 and the glass cladding layer 104a, or between the glass core layer 102 and the glass cladding layer 104b, or both. In such case, the average cladding coefficient of thermal expansion of the first diffusive layer has a value between that of an average cladding coefficient of thermal expansion of the core and an average cladding coefficient of thermal expansion of the first clad layer, or the average cladding coefficient of thermal expansion of the second diffusive layer has a value between that of an average cladding coefficient of thermal expansion of the core and an average cladding coefficient of thermal expansion of the second clad layer.

In embodiments of the laminated glass article 100 described herein, the glass cladding layers 104a, 104b are formed from a first glass composition having an average cladding coefficient of thermal expansion CTEclad and the glass core layer 102 is formed from a second, different glass composition which has an average core coefficient of thermal expansion CTEcore. The CTEcore is greater than CTE_{clad} which results in the glass cladding layers 104a, 104b being compressively stressed without being ion-exchanged or thermally tempered.

Specifically, the glass articles 100 described herein may be formed by a fusion lamination process such as the process described in U.S. Patent No. 4,214,886, which is incorporated herein by reference. Referring to FIG. 2 by way of example, a laminate fusion draw apparatus 200 for forming a laminated glass article includes an upper isopipe 202 which is positioned over a lower isopipe 204. The upper isopipe 202 includes a trough 210 into which a molten glass cladding composition 206 is fed from a melter (not shown). Similarly, the lower isopipe 204 includes a trough 212 into which a molten glass core composition 208 is fed from a melter (not shown). In the embodiments, described herein, the molten glass core composition 208 has an average core coefficient of thermal expansion CTE_{core} which is greater than the average cladding coefficient of thermal expansion CTEclad of the molten glass cladding composition 206.

As the molten glass core composition 208 fills the trough 212, it overflows the trough 212 and flows over the outer forming surfaces 216, 218 of the lower isopipe 204. The outer forming surfaces 216, 218 of the lower isopipe 204 converge at a root 220. Accordingly, the molten glass core composition 208 flowing over the outer forming surfaces 216, 218 rejoins at the root 220 of the lower isopipe 204 thereby forming a glass core layer 102 of a laminated glass article.

Simultaneously, the molten glass cladding compositions 206 overflows the trough 210 formed in the upper isopipe 202 and flows over outer forming surfaces 222, 224 of the upper isopipe 202. The molten glass cladding composition 206 is outwardly deflected by the upper isopipe 202 such that the molten glass cladding composition 206 flows around the lower isopipe 204 and contacts the molten glass core composition 208 flowing over the outer forming surfaces 216, 218 of the lower isopipe, fusing to the molten glass core composition and forming glass cladding layers 104a, 104b around the glass core layer 102.

As noted hereinabove, the molten glass core composition 208 generally has an average core coefficient of thermal expansion CTEcore which is greater than the average cladding coefficient of thermal expansion CTE_{clad} of the molten glass cladding composition 206. Accordingly, as the glass core layer 102 and the glass cladding layers 104a, 104b cool, the difference in the coefficients of thermal expansion of the glass core layer 102 and the glass cladding layers 104a, 104b cause a compressive stresses to develop in the glass cladding layers 104a, 104b. The compressive stress increases the strength of the resulting laminated glass article.

Referring again to the laminated glass article 100 depicted in FIG. 1, the glass cladding layers 104a, 104b of the laminated glass article 100 are formed from a glass composition with a relatively low average coefficient of thermal expansion.

It should now be understood that the glass compositions described herein have relatively low coefficients of thermal expansion. As such, the glass compositions described herein are particularly well suited for use in conjunction with glass compositions with relatively high coefficients of thermal expansion to form a compressively stressed laminated glass article by the fusion laminate process. These glass articles may be employed in a variety of consumer electronic devices including, without limitation, mobile telephones, personal music players, tablet computers, LCD and LED displays, automated teller machines and the like.

It should also be understood that the properties of the glass compositions described herein, (e.g., the liquidus viscosity, the liquidus temperature, and the like) make the glass compositions well suited for use with fusion forming processes, such as the fusion down draw process or the fusion lamination process.

Further, while specific reference has been made herein to the use of the glass compositions as cladding layers of a laminated glass article, it should be understood that the glass compositions may also be used to independently form glass articles (i.e., non-laminated glass articles) such as, for example, cover glasses for electronic devices and other, similar glass articles.

It will be apparent to those skilled in the art that various modifications and variations can be made to the embodiments described herein without departing from the spirit and scope of the claimed subject matter. Thus it is intended that the specification cover the modifications and variations of the various embodiments described herein provided such modification and variations come within the scope of the appended claims and their equivalents.

Aspects of the invention will now be described by way of clauses:
Clause 1. A laminated glass article comprising two outer clad layers and an inner core layer, the clad layer comprising a glass having a Young's modulus greater than about 85 GPa.
Clause 2. The glass article of clause 1, wherein the Young's modulus of the clad glass is between about 85 and 120 GPa.
Clause 3. The glass article of clause 2, wherein the Young's modulus of the clad glass is greater than about 110 GPa.
Clause 4. The glass article of clause 1, wherein the clad glass comprises greater than about 25 mol % Al2O3.
Clause 5. The glass article of clause 4, wherein the clad glass further comprises greater than about 50 mol % CaO.
Clause 6. The glass article of clause 5, wherein the clad glass further comprises greater than about 1 mol % MgO.
Clause 7. The glass article of clause 6, wherein the clad glass comprises less than about 15 mol% SiO2.
Clause 8. The glass article of clause 1, wherein the clad glass comprises at least about 0.1 mol % N.
Clause 9. The glass article of clause 8, wherein the clad glass further comprises at least 5 mol % of Li2O or Na2O or a combination thereof.
Clause 10. The glass article of clause 1, wherein the clad glass comprises greater than about 1 mol % of Y2O3.
Clause 11. The glass article of clause 1, wherein the clad glass comprises greater than about 1 mol % of La2O3.
Clause 12. The glass article of clause 1, wherein the clad glass comprises greater than about 1 mol % of Ta2O5.
Clause 13. The glass article of clause 1, wherein the clad glass comprises greater than about 1 mol % of TiO2.
Clause 14. The glass article of clause 1, wherein the clad glass comprises greater than about 1 mol % of ZrO2.
Clause 15. The glass article of clause 1, wherein the clad glass comprises greater than about 1 mol % of BeO.
Clause 16. The glass article of clause 1, wherein the clad glass comprises greater than about 5 mol % of LiO2.
Clause 17. The glass article of clause 1, wherein the clad glass is paired with a core glass with a higher coefficient of thermal expansion averaged over the range of temperatures from 25°C to 300°C.
Clause 18. The glass article of clause 1, wherein the laminated glass article contains at least one alkali oxide and is chemically strengthened through immersion in a molten salt bath contained at least one larger alkali.
Clause 19. The glass article of clause 1, wherein the clad glass is paired with a core glass with a lower coefficient of thermal expansion averaged over the range of temperatures from 25°C to 300°C, and wherein the laminated glass article is chemically strengthened through immersion in a molten salt bath, so as to obtain both a surface compressive stress and at the clad and a buried stress peak in the core glass.
Clause 20. A laminated glass article comprising two outer clad layers and an inner core layer, the clad layer being composed of a glass having a Vickers microhardness greater than about 9 GPa.
Clause 21. The glass article of clause 20, wherein the Vickers microhardness of the clad glass is greater than about 10 GPa.
Clause 22. The glass article of clause 21, wherein the Vickers microhardness of the clad glass is greater than about 11 GPa.
Clause 23. The glass article of clause 20, wherein the clad glass has a Young's modulus of greater than about 100 GPa.
Clause 24. The glass article of clause 21, wherein the clad glass has a Young's modulus of greater than about 110 GPa.
Clause 25. The glass article of clause 20, wherein the clad glass comprises greater than about 25 mol % Al2O3.
Clause 26. The glass article of clause 25, wherein the clad glass further comprises greater than about 50 mol % CaO.
Clause 27. The glass article of clause 26, wherein the clad glass further comprises greater than about 1 mol % MgO.
Clause 28. The glass article of clause 27, wherein the clad glass comprises less than about 15 mol% SiO2.
Clause 29. The glass article of clause 20, wherein the clad glass comprises at least about 0.1 mol % N.
Clause 30. The glass article of clause 29, wherein the clad glass further comprises at least 5 mol % of Li2O or Na2O or a combination thereof.
Clause 31. The glass article of clause 20, wherein the clad glass comprises greater than about 1 mol % of Y2O3.
Clause 32. The glass article of clause 20, wherein the clad glass comprises greater than about 1 mol % of La2O3.
Clause 33. The glass article of clause 20, wherein the clad glass comprises greater than about 1 mol % of Ta2O5.
Clause 34. The glass article of clause 20, wherein the clad glass comprises greater than about 1 mol % of TiO2.
Clause 35. The glass article of clause 20, wherein the clad glass comprises greater than about 1 mol % of ZrO2.
Clause 36. The glass article of clause 20, wherein the clad glass comprises greater than about 1 mol % of BeO.
Clause 37. The glass article of clause 20, wherein the clad glass comprises greater than about 5 mol % of LiO2.
Clause 38. The glass article of clause 20, wherein the clad glass is paired with a core glass with a higher coefficient of thermal expansion averaged over the range of temperatures from 25°C to 300°C.
Clause 39. The glass article of clause 20, wherein the laminated glass article contains at least one alkali oxide and is chemically strengthened through immersion in a molten salt bath contained at least one larger alkali.
Clause 40. The glass article of clause 20, wherein the clad glass is paired with a core glass with a lower coefficient of thermal expansion averaged over the range of temperatures from 25°C to 300°C, and wherein the laminated glass article is chemically strengthened through immersion in a molten salt bath, so as to obtain both a surface compressive stress and at the clad and a buried stress peak in the core glass.
Clause 41. A method of manufacturing a laminated glass article through the double fusion drawn process, wherein the clad glass has a Young's modulus greater than about 85 GPa.
Clause 42. The method of clause 41, wherein the Young's modulus of the clad glass is greater than about 100 GPa.
Clause 43. The method of clause 42, wherein the Young's modulus of the clad glass is greater than about 110 GPa.
Clause 44. The method of clause 41, wherein the clad glass is paired with a core glass with a higher coefficient of thermal expansion averaged over the range of temperatures from 25°C to 300°C.
Clause 45. The method of clause 41, wherein the laminated glass article contains at least one alkali oxide and is chemically strengthened through immersion in a molten salt bath contained at least one larger alkali.
Clause 46. The method of clause 41, wherein the clad glass is paired with a core glass with a lower coefficient of thermal expansion averaged over the range of temperatures from 25°C to 300°C, and wherein the laminated glass article is chemically strengthened through immersion in a molten salt bath, so as to obtain both a surface compressive stress and at the clad and a buried stress peak in the core glass.
Clause 47. A method of manufacturing a laminated glass article through the double fusion drawn process, wherein the clad glass has a Vickers microhardness greater than about 9 GPa.
Clause 48. The method of clause 44, wherein the Vickers microhardness of the clad glass is greater than about 10 GPa.
Clause 49. The method of clause 44, wherein the Vickers microhardness of the clad glass is greater than about 11 GPa.
Clause 50. The method of clause 47, wherein the clad glass is paired with a core glass with a higher coefficient of thermal expansion averaged over the range of temperatures from 25°C to 300°C.
Clause 51. The method of clause 47, wherein the laminated glass article contains at least one alkali oxide and is chemically strengthened through immersion in a molten salt bath contained at least one larger alkali.
Clause 52. The method of clause 47, wherein the clad glass is paired with a core glass with a lower coefficient of thermal expansion averaged over the range of temperatures from 25°C to 300°C, and wherein the laminated glass article is chemically strengthened through immersion in a molten salt bath, so as to obtain both a surface compressive stress and at the clad and a buried stress peak in the core glass.
Clause 53. A glass article comprising a glass core layer disposed between a first glass cladding layer and a second glass cladding layer, wherein the first glass cladding layer and the second glass cladding layer are formed from a glass composition selected from the group consisting of: aluminate glasses; oxynitride glasses; rare earth/transition metal glasses; beryl glasses; and glasses containing lithium, zirconium, or both lithium and zirconium; and combinations thereof.
Clause 54. The glass article of clause 53, wherein the first glass cladding layer and the second glass cladding layer are ion-exchange strengthened.
Clause 55. The glass article of clause 53, wherein:
   the glass core layer has an average core coefficient of thermal expansion CTE_{core}; and
   the first glass cladding layer and the second glass cladding layer have an average cladding coefficient of thermal expansion CTEclad which is less than the average core coefficient of thermal expansion CTE_{core}.
Clause 56. The glass article of clause 53, wherein the first glass cladding layer and the second glass cladding layer are compressively stressed.
Clause 57. The glass article of clause 53, wherein the first glass cladding layer and the second glass cladding layer further comprise at least one of SnO₂, AS₂O₃, and Sb₂O₃ as a fining agent.
Clause 58. The glass article of clause 21, wherein the fining agent is SnO₂ which is present in the first glass cladding layer and the second glass cladding layer in a concentration greater than 0 mol.% and less than or equal to about 0.7 mol.%.
Clause 59. The glass article of any one of clauses 53to 58, wherein a first surface of the glass core layer is directly adjacent the first glass cladding layer, and wherein a second surface of the glass core layer is directly adjacent the second glass cladding layer.
Clause 60. The glass article of any one of clauses 53to 58, wherein a first diffusive layer is disposed between the first glass cladding layer and the glass core layer.
Clause 61. The glass article of clause 60, wherein the average cladding coefficient of thermal expansion of the first diffusive layer has a value between that of an average cladding coefficient of thermal expansion of the core and an average cladding coefficient of thermal expansion of the first clad layer.
Clause 62. The glass article of clause 60, wherein a second diffusive layer is disposed between the second glass cladding layer and the glass core layer.
Clause 63. The glass article of clause 62, wherein the average cladding coefficient of thermal expansion of the second diffusive layer has a value between that of an average cladding coefficient of thermal expansion of the core and an average cladding coefficient of thermal expansion of the second clad layer.
Clause 64. A use of the glass article of any one of clauses 1 to 40 and 53 to 63 for cover glass or glass backplane applications in consumer or commercial electronic devices including LCD and LED displays, computer monitors, automated teller machines (ATMs), for touch screen or touch sensor applications, for portable electronic devices including mobile telephones, personal media players, and tablet computers, for photovoltaic applications, for architectural glass applications, for automotive or vehicular glass applications, or for commercial or household appliance applications.

## Claims

1. A laminated glass article comprising two outer clad layers and an inner core layer, the clad layers comprising a clad glass having a Young's modulus greater than about 85 GPa and at least one of:
greater than about 1 mol % of Y₂O₃;
greater than about 1 mol % of La₂O₃;
greater than about 1 mol % of TazOs; or
greater than about 1 mol % of TiO₂,
wherein the core layer comprises a core glass having a higher coefficient of thermal expansion averaged over the range of temperatures from 25°C to 300°C than the clad glass or the core layer comprises a core glass having a lower coefficient of thermal expansion averaged over the range of temperatures from 25°C to 300°C than the clad glass.

2. A laminated glass article comprising two outer clad layers and an inner core layer, the clad layer comprising a clad glass having a Vickers microhardness greater than about 9 GPa and at least one of:
greater than about 1 mol % of Y₂O₃;
greater than about 1 mol % of La₂O₃;
greater than about 1 mol % of Ta₂O₅; or
greater than about 1 mol % of TiO₂,
wherein the core layer comprises a core glass having a higher coefficient of thermal expansion averaged over the range of temperatures from 25°C to 300°C than the clad glass or the core layer comprises a core glass having a lower coefficient of thermal expansion averaged over the range of temperatures from 25°C to 300°C than the clad glass.

3. The glass article of claim 1 or claim 2, wherein the Young's modulus of the clad glass is between about 85 GPa and about 120 GPa.

4. The glass article of any of the preceding claims, further comprising at least one alkali oxide, wherein the glass article is chemically strengthened through ion exchange with a salt comprising at least one larger alkali than the alkali oxide of the glass article.

5. The glass article of any of the preceding claims, wherein the glass article is chemically strengthened such that the glass article comprises a surface compressive stress at the clad and a buried stress peak in the core.

6. A method comprising forming the glass article of any of the preceding claims using a fusion draw process.

7. Use of the glass article of any of claims 1 to 5 for cover glass or glass backplane applications in consumer or commercial electronic devices including LCD, LED, OLED, and quantum dot displays, computer monitors, sound bars, and automated teller machines (ATMs); for touch screen or touch sensor applications, for portable electronic devices including mobile telephones, personal media players, and tablet computers; for integrated circuit applications including semiconductor wafers; for photovoltaic applications; for architectural glass applications; for automotive or vehicular glass applications including windows, lighting, instruments, and helmet visors; for commercial or household appliance applications; for lighting or signage applications; for transportation applications including rail and aerospace applications; or for antimicrobial applications.
